# EUROPEAN PATENT APPLICATION

(11) **EP 4 002 084 A1**
(43) Date of publication of application: **25.05.2022**
(21) Application number: 21207813.3
(22) Date of filing: 11.11.2021
(51) Int. Cl.: G06F 3/12, B41J 3/36

(54) **INFORMATION PROCESSING APPARATUS, INFORMATION PROCESSING METHOD, INFORMATION PROCESSING SYSTEM, AND CARRIER MEANS**

(30) Priority: 16.11.2020 JP 2020190567; 03.09.2021 JP 2021144047
(71) Applicant: Ricoh Company, Ltd., Ohta-ku Tokyo 143-8555 (JP)
(72) Inventor: Shikama, Takeshi, Tokyo, 143-8555 (JP); Tanaka, Hiroki, Tokyo, 143-8555 (JP)
(74) Representative: White, Duncan Rohan

(57) **Abstract**

An information processing apparatus (1) includes a receiving unit (802e), a print data generating unit (803a), and a transceiver unit (803c). The receiving unit (802e), as a component displayed on a screen by an application configured to process tabular data, receives a print instruction for an element included in the tabular data to be printed. The print data generating unit (803a) generates print data corresponding to the element in response to the receiving unit (802e) receiving the print instruction. The transceiver unit (803c) transmits the print data generated by the print data generating unit (803a) to a printing apparatus.

## Description

### BACKGROUND

### Technical Field

Embodiments of the present disclosure relate to an information processing apparatus, an information processing method, an information processing system, and a carrier means.

### Related Art

Rapid spread of compact notebook personal computers (PCs) and smart devices raises a major demand for compact and portable printing apparatuses. One approach to such a demand involves developing a handheld printer that applies ink while being manually operated on a paper surface, without a paper conveyance system. The handheld printer is an example of printing apparatuses that is operated to move on a recording medium (e.g., a notebook or a standard sheet) and form an image on the recording medium according to print data (e.g., image data) received from an information processing apparatus (e.g., a smart device or a PC) having a communication function.

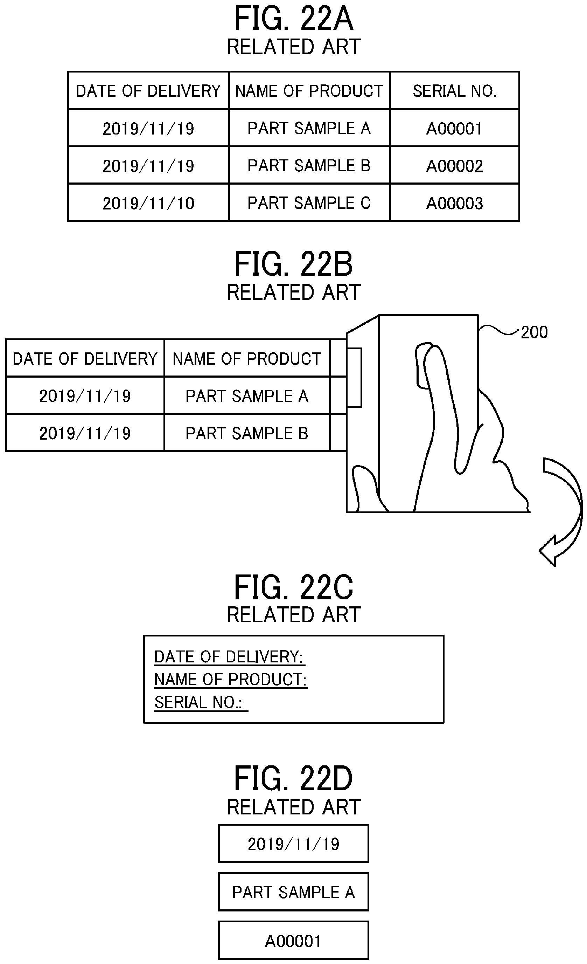

Incidentally, there is a demand for reducing the time and effort for, e.g., user to print an image on a recording medium with a printing apparatus. When printing tabular data illustrated in FIG. 22A (e.g., data in comma-separated values (CSV) format), background handheld printers print the entire tabular data as illustrated in FIG. 22B by several operations (i.e., several times of movement) according to the size of the tabular data. However, when printing individual elements (such as "2019/11/19," "part sample A," and "A00001" in the example illustrated in FIG. 22A) included in data at the respective positions on an actual part sample A as illustrated in FIG. 22C, background printers print data of the individual elements transmitted one by one from, e.g., a smart device as illustrated in FIG. 22D. In short, such background handheld printers are not user-friendly devices.

### SUMMARY

In light of the above-described problems, it is a general object of the present invention to provide an information processing apparatus, an information processing method, an information processing system, and a carrier means that facilitate printing of individual elements included in tabular data.

In order to achieve the above-mentioned object, there is provided an information processing apparatus according to claim 1. Advantageous embodiments are defined by the dependent claims. Advantageously, the information processing apparatus includes a receiving unit, a print data generating unit, and a transceiver unit. The receiving unit, as a component displayed on a screen by an application configured to process tabular data, receives a print instruction for an element included in the tabular data to be printed. The print data generating unit generates print data corresponding to the element in response to the receiving unit receiving the print instruction. The transceiver unit transmits the print data generated by the print data generating unit to a printing apparatus.

Accordingly, printing of individual elements included in tabular data is facilitated.

Advantageously, there is also provided an image processing method.

Accordingly, printing of individual elements included in tabular data is facilitated.

### BRIEF DESCRIPTION OF THE DRAWINGS

A more complete appreciation of the disclosure and many of the attendant advantages and features thereof can be readily obtained and understood from the following detailed description with reference to the accompanying drawings, wherein:
FIG. 1 is a diagram illustrating a configuration of a printing system according to an embodiment;
FIG. 2 is a diagram illustrating a hardware configuration of an information processing apparatus of the printing system illustrated in FIG. 1;
FIG. 3 is a block diagram illustrating a hardware configuration of a handheld printer of the printing system illustrated in FIG. 1;
FIG. 4 is a diagram illustrating a functional configuration of a controller included in the handheld printer illustrated in FIG. 3;
FIG. 5A is a block diagram illustrating a functional configuration of the information processing apparatus illustrated in FIG. 2;
FIG. 5B is a diagram illustrating a specific example of functional configuration of the information processing apparatus illustrated in FIG. 2;
FIG. 6 is a diagram illustrating an example of data processed in table format by an application of the information processing apparatus illustrated in FIG. 2;
FIG. 7 is a diagram illustrating data extracted, as data to be printed, by the information processing apparatus illustrated in FIG. 2;
FIG. 8 is a diagram illustrating a device search screen displayed on the information processing apparatus illustrated in FIG. 2;
FIG. 9 is a diagram illustrating a connection screen displayed on the information processing apparatus illustrated in FIG. 2;
FIG. 10 is a diagram illustrating a connection completion screen displayed on the information processing apparatus illustrated in FIG. 2;
FIG. 11 is a diagram illustrating a print screen displayed on the information processing apparatus illustrated in FIG. 2;
FIG. 12 is a diagram illustrating a pop-up displayed on the information processing apparatus illustrated in FIG. 2 when printing is completed;
FIG. 13 is a diagram illustrating a print cancelling screen displayed on the information processing apparatus illustrated in FIG. 2;
FIG. 14 is a diagram illustrating a pop-up displayed on the information processing apparatus illustrated in FIG. 2 when print data is deleted;
FIG. 15 is a diagram illustrating a preview screen displayed after a setting information extraction process on the information processing apparatus illustrated in FIG. 2;
FIG. 16 is a diagram illustrating an example of setting information extracted by the information processing apparatus illustrated in FIG. 2;
FIG. 17A is a diagram illustrating another example of setting information extracted by the information processing apparatus illustrated in FIG. 2;
FIG. 17B is a diagram illustrating macros including setting information executed by the information processing apparatus illustrated in FIG. 2;
FIG. 18A is a diagram illustrating an example of designation of a print range by the information processing apparatus illustrated in FIG. 2;
FIG. 18B is a flowchart illustrating a print data generating process performed by the information processing apparatus illustrated in FIG. 2;
FIG. 19 is a diagram illustrating a device information screen displayed on the information processing apparatus illustrated in FIG. 2;
FIG. 20 is a sequence diagram illustrating a handheld printer control process performed by the information processing apparatus illustrated in FIG. 2;
FIG. 21 is a block diagram illustrating a functional configuration of an information processing apparatus according to a specific example; and
FIG. 22A is diagram illustrating a table to be printed by a background handheld printer;
FIG. 22B is a diagram illustrating the background handheld printer printing the table;
FIG. 22C is a diagram illustrating a part of the table; and
FIG. 22D is a diagram illustrating elements included in the table.

The accompanying drawings are intended to depict embodiments of the present invention and should not be interpreted to limit the scope thereof. The accompanying drawings are not to be considered as drawn to scale unless explicitly noted. Also, identical or similar reference numerals designate identical or similar components throughout the several views.

### DETAILED DESCRIPTION

In describing embodiments illustrated in the drawings, specific terminology is employed for the sake of clarity. However, the disclosure of this specification is not intended to be limited to the specific terminology so selected and it is to be understood that each specific element includes all technical equivalents that have a similar function, operate in a similar manner, and achieve a similar result. As used herein, the singular forms "a," "an," and "the" are intended to include the plural forms as well, unless the context clearly indicates otherwise.

In a later-described comparative example, embodiment, and exemplary variation, for the sake of simplicity, like reference numerals are given to identical or corresponding constituent elements such as parts and materials having the same functions, and redundant descriptions thereof are omitted unless otherwise required.

Referring to the drawings, wherein like reference numerals designate identical or corresponding parts throughout the several views, embodiments of the present disclosure are described below.

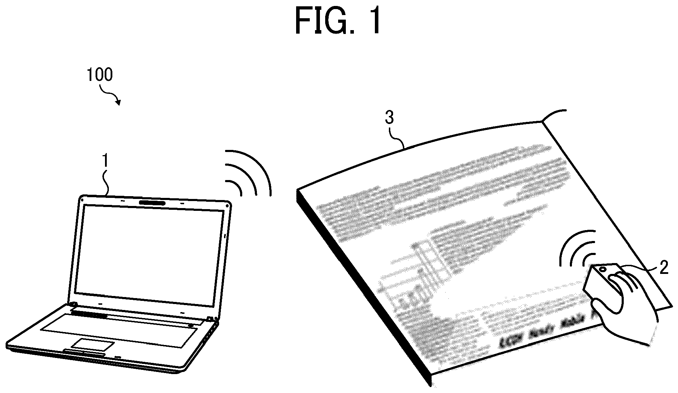

FIG. 1 is a diagram illustrating a configuration of a printing system 100 according to the present embodiment.

According to the present embodiment, as illustrated in FIG. 1, the printing system 100 serving as an information processing system includes an information processing apparatus 1 serving as an information processing apparatus and a handheld printer 2 serving as a printing apparatus.

The information processing apparatus 1 may be an electronic device capable of wireless communication (or wired communication), such as a smartphone, a tablet terminal device, or a notebook or desktop personal computer device. The information processing apparatus 1 transmits, to the handheld printer 2, print data (or image data) of an image to be printed on a recording medium 3.

As illustrated in FIG. 1, the handheld printer 2 as a lightweight and compact printing apparatus is gripped and operated by, e.g., a user with one hand to move on the recording medium 3 and print text or an image corresponding to the print data received from the information processing apparatus 1 on the recording medium 3 according to the operation amount.

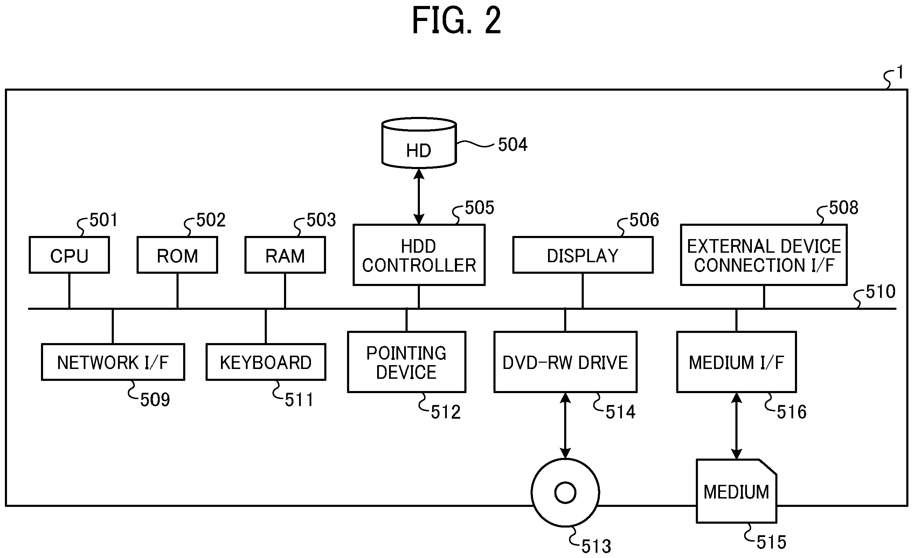

FIG. 2 is a diagram illustrating a hardware configuration of the information processing apparatus 1 according to the present embodiment.

As illustrated in FIG. 2, the information processing apparatus 1 is implemented by a computer. The information processing apparatus 1 includes a central processing unit (CPU) 501, a read only memory (ROM) 502, a random access memory (RAM) 503, a hard disk (HD) 504, a hard disk drive (HDD) controller 505, a display 506, an external device connection interface (I/F) 508, a network I/F 509, a bus line 510, a keyboard 511, a pointing device 512, a digital versatile disc rewritable (DVD-RW) drive 514, and a medium I/F 516.

The CPU 501 controls an overall operation of the information processing apparatus 1. The ROM 502 stores programs such as an initial program loader (IPL) to boot the CPU 501. The RAM 503 is used as a work area for the CPU 501. The HD 504 stores various data such as a program. The HDD controller 505 controls reading or writing of various data from or to the HD 504 under control of the CPU 501. The display 506 displays various kinds of information such as a cursor, a menu, a window, text, or an image. The external device connection I/F 508 is an interface that connects the information processing apparatus 1 to various external devices. Examples of the external devices include, but are not limited to, a universal serial bus (USB) memory and a printer. The network I/F 509 is an interface that enables data communication through a communication network. The bus line 510 is, e.g., an address bus or a data bus, which electrically connects the components illustrated in FIG. 2, such as the CPU 501.

The keyboard 511 serves as an input device provided with a plurality of keys that allows, e.g., a user to input text (or characters), numerals, or various instructions. The pointing device 512 also serves as an input device that allows, e.g., a user to select or execute a specific instruction, select an object to be processed, or move a cursor. The DVD-RW drive 514 controls reading or writing of various data from or to a DVD-RW 513 serving as a removable recording or storage medium. The removable storage medium is not limited to the DVD-RW 513 and may be a digital versatile disk-recordable (DVD-R), for example.

The medium I/F 516 controls reading or writing (i.e., storing) of data from or to a storage medium 515 such as a flash memory.

According to a print data generation program, the CPU 501 displays, on the display 506, e.g., a print-data selection screen that allows, e.g., a user to select desired print data and a print-data edit screen that allows the user to edit the print data. In other words, the user selects and edits the desired print data on the print-data selection screen and the print-data edit screen, respectively. Such screens facilitate generation of desired print data. The print data is then transmitted to the handheld printer 2 and printed.

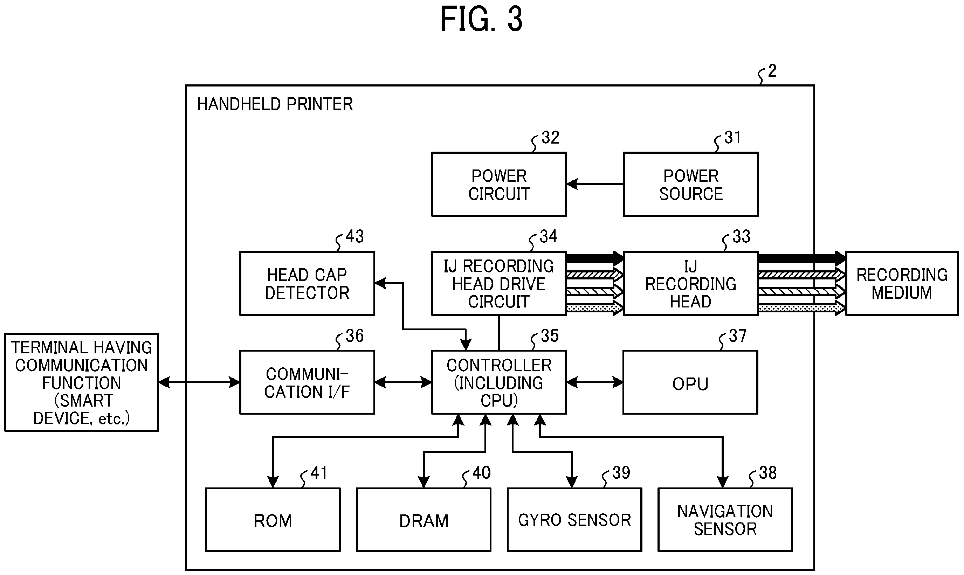

FIG. 3 is a block diagram illustrating a hardware configuration of the handheld printer 2 according to the present embodiment.

As illustrated in FIG. 3, the handheld printer 2 includes a power source 31, a power circuit 32, an inkjet (IJ) recording head 33, an IJ recording head drive circuit 34, a controller 35, a communication I/F 36, an operation panel unit (OPU) 37, a navigation sensor 38, a gyro sensor 39, a dynamic RAM (DRAM) 40, a ROM 41, and a head cap detector 43.

The power source 31 is a rechargeable battery (or a secondary battery) that generates power to drive the handheld printer 2. The power circuit 32 supplies power from the power source 31 to components of the handheld printer 2. The IJ recording head 33 includes nozzles that discharge ink. The IJ recording head 33 employs an inkjet system to discharge ink from the nozzles onto the recording medium 3. The IJ recording head drive circuit 34 controls the discharge of ink from the nozzles of the IJ recording head 33 to print text or images on the recording medium 3. The controller 35 controls the handheld printer 2 as a whole.

The communication I/F 36 that enables wireless communication between the handheld printer 2 and the information processing apparatus 1. The wireless communication is, e.g., short-range wireless communication such as Bluetooth^{®} communication. The OPU 37 includes, e.g., a light emitting diode (LED) to display the state of the handheld printer 2 and a switch with which, e.g., a user instructs the handheld printer 2 to start printing. The OPU 37 may include a liquid crystal display or a touch panel. Optionally, the OPU 37 may have a voice input function.

The navigation sensor 38 includes an acceleration sensor. The navigation sensor 38 detects a movement amount in an X-axis direction of the handheld printer 2 and a movement amount in a Y-axis direction of the handheld printer 2, based on the acceleration during operation of the handheld printer 2. The gyro sensor 39 detects an angular velocity applied to the handheld printer 2. The DRAM 40 and the ROM 41 are storage devices or memories that store, e.g., print data and operational direction information (i.e., moving direction information) indicating the operational direction (i.e., moving direction) of the handheld printer 2 at the time of printing. The ROM 41 also stores a print processing program and driving waveform data of the IJ recording head 33.

In response to print data transmitted from the information processing apparatus 1, in the handheld printer 2, the controller 35 calculates the position of each nozzle of the IJ recording head 33, based on information input from the navigation sensor 38 and the gyro sensor 39. While the handheld printer 2 is operated by, e.g., a user, the controller 35 continuously calculates the position of each nozzle and acquires the print data corresponding to the calculated position from the DRAM 40. Then, the controller 35 compares the position of the acquired image with the position of each nozzle. When determining that the position of the acquired image matches the position of each nozzle, the controller 35 supplies the print data of the nozzle to the IJ recording head drive circuit 34.

The IJ recording head drive circuit 34 supplies print timing information together with the print data to the IJ recording head 33. According to the print timing information, the IJ recording head 33 discharges ink according to the print data onto the recording medium 3. Thus, e.g., an image or text corresponding to the print data designated by the user is recorded on the recording medium 3.

The head cap detector 43 detects whether the head cap 16 is attached to the handheld printer 2. In the present embodiment, the handheld printer 2 includes a timer. The timer measures time and supplies time measurement information to the controller 35. The controller 35 monitors the drying state of the IJ recording head 33 based on the time measurement information and whether the head cap 16 is attached, to perform warning control at a given time, for example.

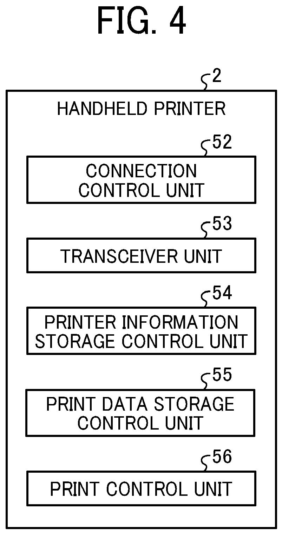

FIG. 4 is a diagram illustrating a functional configuration of the controller 35 included in the handheld printer 2 according to the present embodiment.

In the handheld printer 2 according to the present embodiment, a CPU included in the controller 35 executes various programs stored in the ROM 41 to implement a connection control unit 52, a transceiver unit 53, a printer information storage control unit 54, a print data storage control unit 55, and a print control unit 56, as illustrated in FIG. 4.

The connection control unit 52 controls connection between the handheld printer 2 and the information processing apparatus 1. The transceiver unit 53 sends and receives various kinds of information to and from the information processing apparatus 1. For example, the transceiver unit 53 notifies the information processing apparatus 1 of completion of deletion of print data in response to a print cancelling instruction. The transceiver unit 53 also sends device information to the information processing apparatus 1 in response to a request for device information on the handheld printer 2. The printer information storage control unit 54 stores, in a printer information memory (e.g., the DRAM 40), printer information (i.e., device information) on the handheld printer 2. The print data storage control unit 55 temporarily stores, in a print data memory (e.g., the DRAM 40), print data received from the information processing apparatus 1. The print data storage control unit 55 also deletes the print data stored in the print data memory when the printing of the print data is canceled. The print control unit 56 controls printing of print data in the handheld printer 2.

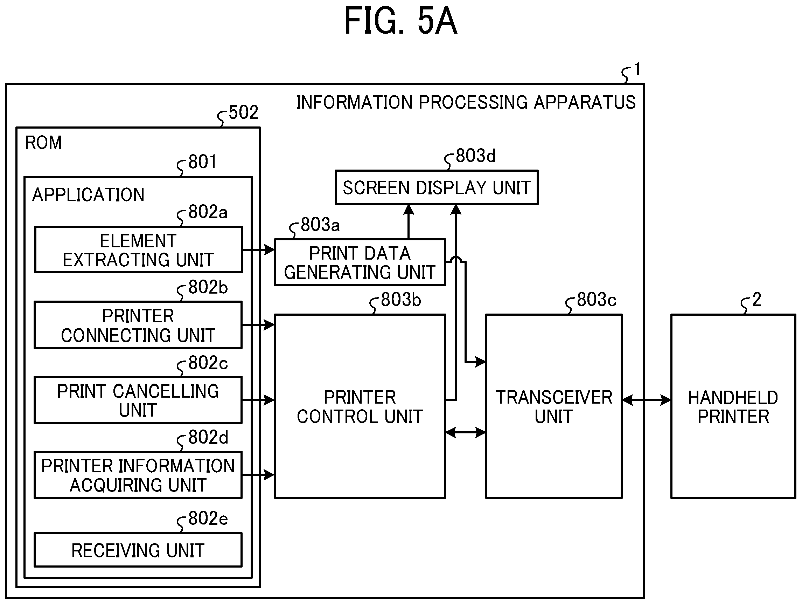

Referring now to FIG. 5A, a description is given of a functional configuration of the information processing apparatus 1 according to the present embodiment.

FIG. 5A is a block diagram illustrating an example of the functional configuration of the information processing apparatus 1 according to the present embodiment.

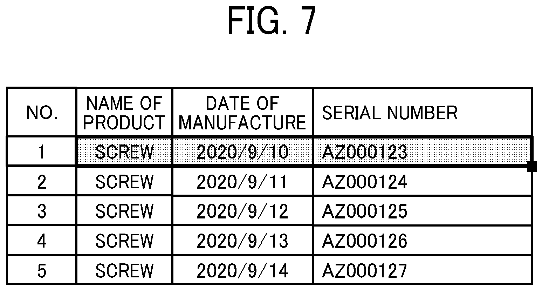

In the information processing apparatus 1 according to the present embodiment, as illustrated in FIG. 5A, the ROM 502 stores an application 801 that is executed by the CPU 501. The application 801 processes tabular data (i.e., data in table format) and has at least one function. The tabular data is data in which elements are arranged in a table constructed of rows (e.g., "No." illustrated in FIG. 7) and columns (e.g., "name of product," "data of manufacture," and "serial number" illustrated in FIG. 7). The elements are data elements (or values) arranged in the table. As illustrated in FIG. 5A, the application 801 includes, as functions, a receiving unit 802e, an element extracting unit 802a, a printer connecting unit 802b, a print cancelling unit 802c, and a printer information acquiring unit 802d.

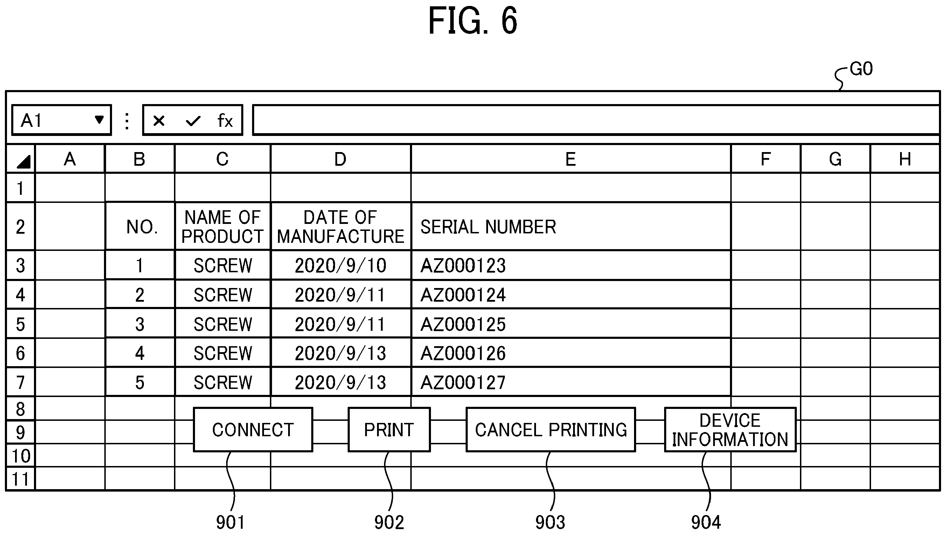

The receiving unit 802e corresponds to one or more components (e.g., various buttons) displayed on a screen by the application 801. When the component is pressed, the receiving unit 802e instructs one of the units 802a to 802d associated with the pressed component to process the associated function. The element extracting unit 802a is a function of receiving a print instruction for an element included in the tabular data to be printed from the receiving unit 802e, when the component (e.g., a print button 902 in FIG. 6) displayed on the screen by the application 801 is pressed, and extracting the element from the tabular data. The printer connecting unit 802b is a function of receiving a connection instruction for the information processing apparatus 1 to be connected to the handheld printer 2 from the receiving unit 802e when the component (e.g., a connection button 901 in FIG. 6) displayed on the screen by the application 801 is pressed. The print cancelling unit 802c is a function of receiving a print cancelling instruction for the printing to be cancelled from the receiving unit 802e when the component (e.g., a print cancellation button 903 in FIG. 6) displayed on the screen by the application 801 is pressed. The printer information acquiring unit 802d is a function of receiving a device information acquiring instruction for printer information (i.e., device information) on the handheld printer 2 to be acquired from the receiving unit 802e when the component (e.g., a device information button 904 in FIG. 6) displayed on the screen by the application 801 is pressed.

As illustrated in FIG. 5A, the information processing apparatus 1 according to the present embodiment includes a print data generating unit 803a, a printer control unit 803b, a transceiver unit 803c, and a screen display unit 803d, which are executed by the CPU 501.

The print data generating unit 803a receives the element extracted from the tabular data by the element extracting unit 802a of the application 801 and generates print data of the element. In a case in which the element extracting unit 802a extracts multiple elements from the tabular data, the print data generating unit 803a receives the elements and generates the print data of the individual elements separately from each other. The printer control unit 803b controls communication between the information processing apparatus 1 and the handheld printer 2. Specifically, when the printer connecting unit 802b receives the connection instruction for the information processing apparatus 1 to be connected to the handheld printer 2, the printer control unit 803b connects the information processing apparatus 1 to the handheld printer 2. In other words, the printer control unit 803b connects the information processing apparatus 1 to the handheld printer 2 in response to the connection instruction from the printer connecting unit 802b. When the print cancelling unit 802c receives the print cancelling instruction, the printer control unit 803b instructs the handheld printer 2 to cancel the printing. In other words, the printer control unit 803b instructs the handheld printer 2 to cancel the printing in response to the print cancelling instruction from the print cancelling unit 802c. When the printer information acquiring unit 802d receives the device information acquiring instruction, the printer control unit 803b acquires the device information from the handheld printer 2. In other words, the printer control unit 803b acquires the device information from the handheld printer 2 in response to the device information acquiring instruction from the printer information acquiring unit 802d. The transceiver unit 803c sends and receives various kinds of information to and from the handheld printer 2. The screen display unit 803d is a display control unit that controls display of various kinds of information (e.g., the device information received from the handheld printer 2) on the display 506.

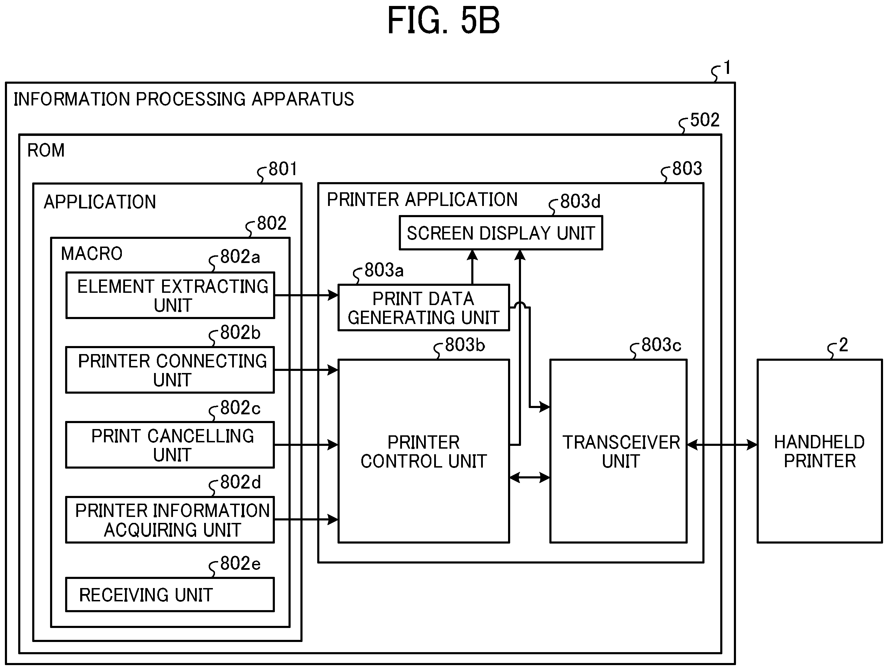

FIG. 5B is a diagram illustrating a specific example of functional configuration of the information processing apparatus 1 according to the present embodiment.

In the information processing apparatus 1 according to the present embodiment, as illustrated in FIG. 5B, the ROM 502 stores applications (i.e., programs) executed by the CPU 501, such as the application 801 and a printer application 803. The application 801 includes a macro 802 such as a macro in Visual Basic for Applications (VBA). The macro 802 is a singe command that executes a series of commands. In the present embodiment, the receiving unit 802e, the element extracting unit 802a, the printer connecting unit 802b, the print cancelling unit 802c, and the printer information acquiring unit 802d are implemented by the macro 802. In other words, in the present embodiment, the macro 802 is a function that collectively calls a plurality of functions such as the receiving unit 802e, the element extracting unit 802a, the printer connecting unit 802b, the print cancelling unit 802c, and the printer information acquiring unit 802d. In the present embodiment, the print data generating unit 803a, the printer control unit 803b, the transceiver unit 803c, and the screen display unit 803d are implemented by the printer application 803.

Specifically, the application 801 is, e.g., an Excel ^{®} printer application. The application 801 is an application that processes (or manages) data in table format. In the present embodiment, the application 801 is an application in which various data of, e.g., a user is registered. In the present embodiment, the application 801 displays various user interfaces (UIs) on the application 801 on the display 506. In other words, the application 801 displays the tabular data managed (or generated) by the application 801 and various UIs on the display 506.

Examples of the UIs include, but are not limited to, the displayed components (e.g., various buttons) that are used to call the procedures of the functions of the application 801. The procedure of the functions may be referred to as function procedures in the following description. Examples of the various buttons include, but are not limited to, a print button that is used to call a procedure for giving instructions for the tabular data to be printed and a connection button that is used to call a procedure for giving instructions for the information processing apparatus 1 to be connected to the handheld printer 2 such that the information processing apparatus 1 can communicate with the handheld printer 2. In the present embodiment, the UIs are stored in association with the respective functions (specifically, the respective function procedures). When the UI is operated by, e.g., a user of the information processing apparatus 1, the application 801 executes the source code of the procedure of the function associated with the UI to instruct the unit associated with the operated UI to process the associated function.

The receiving unit 802e receives, e.g., the print instruction, the connection instruction, the print cancelling instruction, and the device information acquiring instruction. The print instruction is an instruction for the data processed in table format by the application 801 to be printed. The connection instruction is an instruction for the information processing apparatus 1 to be connected to the handheld printer 2 such that the information processing apparatus 1 can communicate with the handheld printer 2. The print cancelling instruction instructs the handheld printer 2 to delete the print data. The device information acquiring instruction is an instruction for the device information of the handheld printer 2 to be acquired.

When the receiving unit 802e receives the print instruction, the element extracting unit 802a extracts, as data to be printed, at least one element to be printed by the handheld printer 2, from elements included in the data processed in table format by the application 801. The elements included in the data processed in table format by the application 801 are text data and include, e.g., font size, decorative characters, and color information.

For example, the element extracting unit 802a extracts, as the data to be printed, data of one cell from the data processed in table format by the application 801. The data of one cell is an element of one cell among the elements included in the data processed in table format by the application 801. Thus, the data processed in table format by the application 801 is printed for each cell. In addition, for example, the element extracting unit 802a extracts, as the data to be printed, combined data of a plurality of cells from the data processed in table format by the application 801. Thus, the data of the plurality of cells extracted from the data managed in table format by the application 801 is printed by one print job. In the present embodiment, the element extracting unit 802a extracts a format, path information, a combining instruction, and setting information such as print settings associated with the data to be printed. The setting information is information on printing of the print data. The format is a format such as the type of print data (e.g., text, Quick Response Code (QR code^{®}), barcode, or image data). In a case in which the format is an image, the path information indicates a path of a local folder in which image data of the data to be printed is stored. The combining instruction is an instruction for a plurality of print data to be combined.

When the receiving unit 802e receives the connection instruction, the printer connecting unit 802b transfers the connection instruction to the printer control unit 803b. When the receiving unit 802e receives the print cancelling instruction, the print cancelling unit 802c transfers the print cancelling instruction to the printer control unit 803b. When the receiving unit 802e receives the device information acquiring instruction, the printer information acquiring unit 802d transfers the device information acquiring instruction to the printer control unit 803b.

In response to the setting information such as the print settings, processing instructions, and the data to be printed from the macro 802, the printer application 803 converts the data to be printed to print data, acquires the device information of the handheld printer 2, searches for the handheld printer 2 and connect the information processing apparatus 1 to the handheld printer 2, combines a plurality of print data, or instructs the handheld printer 2 to print the print data or cancel the printing of the print data.

Specifically, when the receiving unit 802e receives the print instruction for an element to be printed, the print data generating unit 803a generates print data corresponding to the element. For example, the print data generating unit 803a converts the data to be printed that has been extracted by the element extracting unit 802a into print data for the handheld printer 2. Then, the transceiver unit 803c transmits the print data generated by the print data generating unit 803a to the handheld printer 2.

Such a configuration obviates the need to convert the elements included in the data processed in table format by the application 801 into comma-separated values (CSV) or the need for, e.g., a user to manually copy the elements and input the elements to a dedicated application when the handheld printer 2 prints the data processed in table format by the application 801. In other words, such a configuration facilitates printing of individual elements included in the data processed in table format by the application 801.

The print data generating unit 803a generates print data according to the setting information associated with the element extracted by the element extracting unit 802a. For example, the print data generating unit 803a converts the data to be printed into print data in a format associated with the data to be printed. Specifically, the print data generating unit 803a converts the data to be printed into print data in a format such as QR Code^{®} or a barcode. Finally, the print data is printed on the recording medium 3. The screen display unit 803d displays, on the display 506, the print data generated by the print data generating unit 803a. This allows, e.g., a user to confirm a print image before printing the print data.

When the format associated with the data to be printed is an image, the print data generating unit 803a acquires image data according to the path information. Then, the transceiver unit 803c transmits the acquired image data as print data to the handheld printer 2. When the combining instruction is associated with the data to be printed, the print data generating unit 803a combines print data corresponding to each of a plurality of data to be printed. Then, the transceiver unit 803c transmits the combined print data to the handheld printer 2.

In response to the device information acquiring instruction from the printer information acquiring unit 802d, the printer control unit 803b communicates with the handheld printer 2 to acquire the device information. The screen display unit 803d displays the acquired device information on the display 506. For example, the screen display unit 803d displays, e.g., a pop-up screen or a setting screen on the display 506 according to the device information. This allows, e.g., a user to confirm various kinds of information on printing with the handheld printer 2, such as the state of the handheld printer 2. In addition, the screen display unit 803d displays, on the display 506, a button that is used to print the data to be printed, according to the acquired device information. This allows the user to operate the handheld printer 2 with reference to the device information displayed on the display 506.

The printer control unit 803b searches for the handheld printer 2 via the transceiver unit 803c in response to the connection instruction from the printer connecting unit 802b. The screen display unit 803d displays the search result (i.e., searched handheld printers 2) on the display 506. The printer control unit 803b is connected, via the transceiver unit 803c, to the handheld printer 2 selected from the search result of the handheld printer 2 (i.e., the searched handheld printers 2) such that the printer control unit 803b can communicate with the selected handheld printer 2. The screen display unit 803d displays, on the display 506, the result of connection between the printer control unit 803b and the selected handheld printer 2.

The printer control unit 803b instructs, via the transceiver unit 803c, the handheld printer 2 to delete the print data stored in the handheld printer 2, in response to the print cancelling instruction from the print cancelling unit 802c. The screen display unit 803d displays, on the display 506, a screen to provide information indicating that the printing with the handheld printer 2 is canceled.

Referring now to FIG. 6, a description is given of data processed in table format by the application 801 of the information processing apparatus 1 according to the present embodiment.

FIG. 6 is a diagram illustrating an example of data processed in table format by the application 801 of the information processing apparatus 1 according to the present embodiment.

In the present embodiment, the application 801 generates the data processed in table format as illustrated in FIG. 6. The application 801 displays, on the display 506, a screen G0 including the generated data and various buttons (i.e., UIs). The various buttons are buttons that are used to call the function procedures. In the present embodiment, the function procedures are called when the respective buttons are pressed. Alternatively, the function procedures may be called by an operation of, e.g., a shortcut (e.g., Ctrl + 9) of the information processing apparatus 1.

In the present embodiment, as illustrated in FIG. 6, the various buttons include the connection button 901, the print button 902, the print cancellation button 903, and the device information button 904. The connection button 901 is a button that is used to call procedures of the printer connecting unit 802b for giving instructions for the handheld printer 2 to be searched for via Bluetooth^{®} or a USB and for a dialog of the search result of the handheld printer 2 to be displayed. The print button 902 is a button that is used to call procedures of the element extracting unit 802a for extracting data to be printed from the data processed in table format by the application 801 and for giving instructions for the data to be printed.

The print cancellation button 903 is a button that is used to call a procedure of the print cancelling unit 802c for giving instructions for the printing with the handheld printer 2 to be cancelled when the print cancellation button 903 is pressed during a printing operation of the handheld printer 2. The device information button 904 is a button that is used to call a procedure of the printer information acquiring unit 802d for giving instructions for the device information on the handheld printer 2 to be acquired. In the present embodiment, the various buttons include the connection button 901, the print button 902, the print cancellation button 903, and the device information button 904. However, the various buttons are not limited to the connection button 901, the print button 902, the print cancellation button 903, and the device information button 904 provided that the various buttons or an alternative button calls procedures of the macro 802.

Referring now to FIG. 7, a description is given of a process for the information processing apparatus 1 to extract data to be printed according to the present embodiment.

FIG. 7 is a diagram illustrating data extracted, as data to be printed, by the information processing apparatus 1 according to the present embodiment.

In the present embodiment, when the print button 902 is pressed, the element extracting unit 802a extracts, as data to be printed, an element (e.g., an element of a shaded cell) designated by, e.g., a user from elements included in the data processed in table format by the application 801 as illustrated in FIG. 7. Then, the element extracting unit 802a transfers the extracted data to be printed to the print data generating unit 803a and instructs the print data generating unit 803a to print the data to be printed.

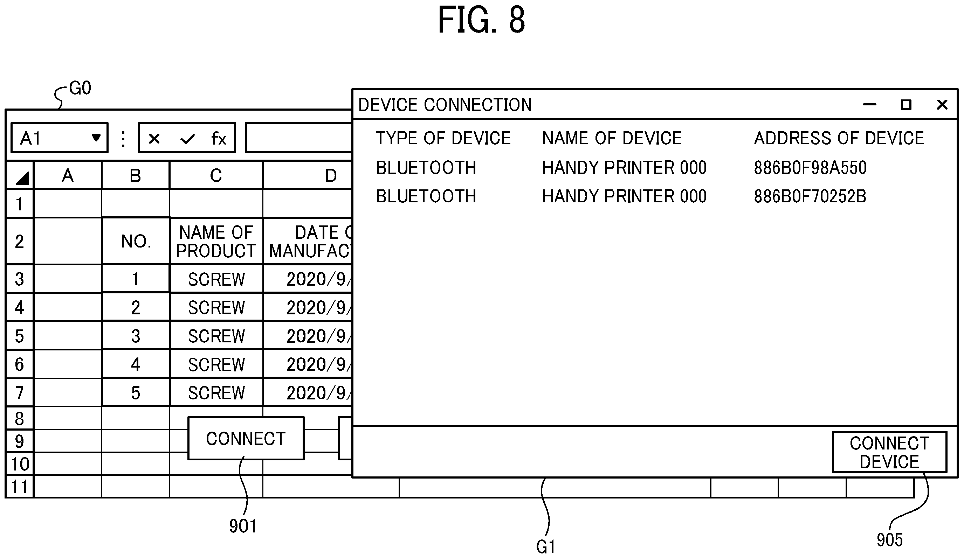

Referring now to FIG. 8, a description is given of a device search screen displayed on the information processing apparatus 1 according to the present embodiment.

FIG. 8 is a diagram illustrating an example of the device search screen displayed on the information processing apparatus 1 according to the present embodiment.

In the present embodiment, when the connection button 901 is pressed and the printer connecting unit 802b transfers the connection instruction to the printer connecting unit 802b, the printer control unit 803b searches for the handheld printer 2 via Bluetooth^{®} or a USB.

As illustrated in FIG. 8, the screen display unit 803d displays, on the display 506, a device search screen G1 including the search result of the handheld printer 2 and a device connection button 905 that is used to give instructions for the information processing apparatus 1 to be connected to the handheld printer 2.

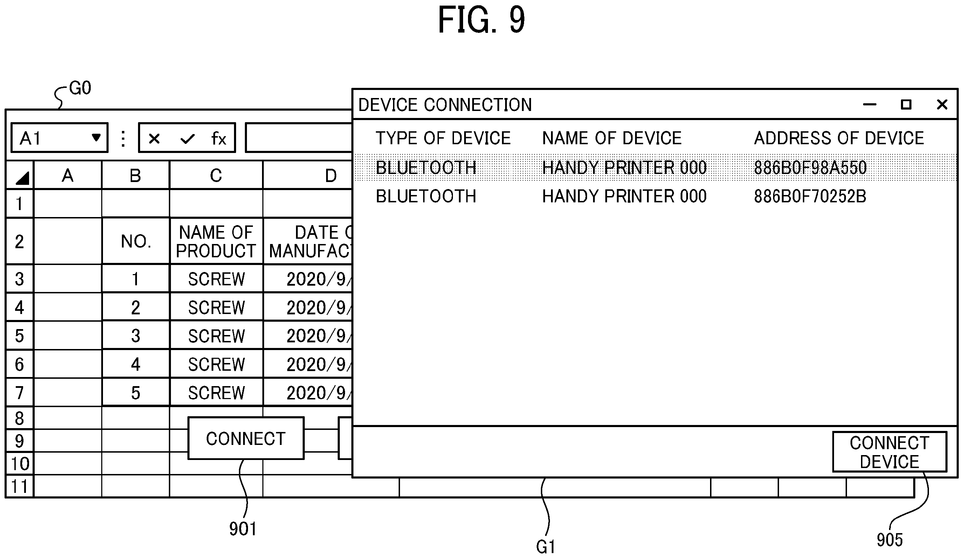

Referring now to FIG. 9, a description is given of a connection screen displayed on the information processing apparatus 1 according to the present embodiment.

FIG. 9 is a diagram illustrating an example of the connection screen displayed on the information processing apparatus 1 according to the present embodiment.

In the present embodiment, as illustrated in FIG. 9, when the handheld printer 2 is selected on the device search screen G1 and the device connection button 905 is pressed, the printer control unit 803b executes device connection that enables communication between the information processing apparatus 1 and the selected handheld printer 2. When a disconnection button (not illustrated in FIG. 9) is pressed, the printer control unit 803b disconnects the communication between the information processing apparatus 1 and the handheld printer 2.

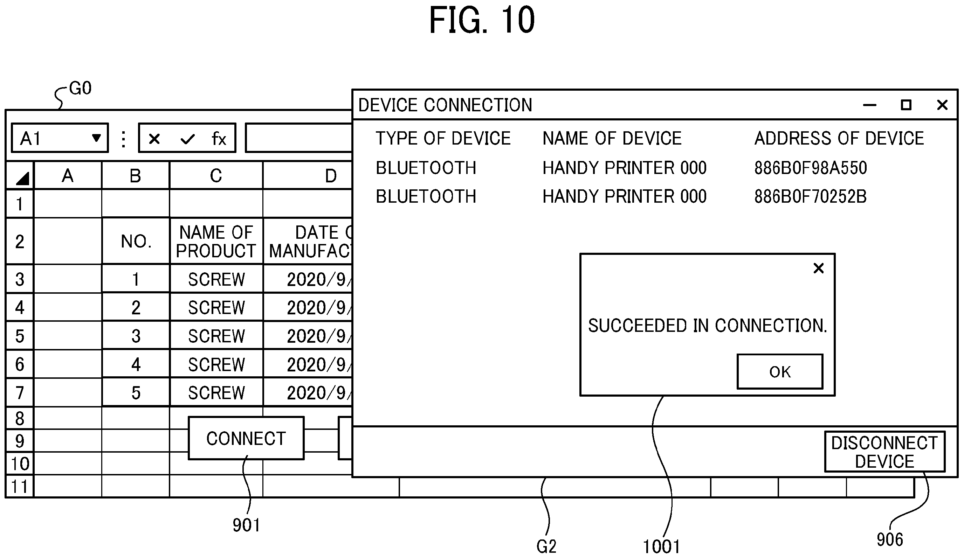

Referring now to FIG. 10, a description is given of a connection completion screen displayed on the information processing apparatus 1 according to the present embodiment.

FIG. 10 is a diagram illustrating an example of the connection completion screen displayed on the information processing apparatus 1 according to the present embodiment.

In the present embodiment, when the information processing apparatus 1 is connected to the handheld printer 2 such that the information processing apparatus 1 can communicate with the handheld printer 2, the screen display unit 803d displays, on the display 506, a connection result screen G2 including a message 1001 and a device disconnection button 906 as illustrated in FIG. 10. The message 1001 provides information indicating a successful connection between the information processing apparatus 1 and the handheld printer 2. The device disconnection button 906 is used to instruct the information processing apparatus 1 to disconnect the communication between the information processing apparatus 1 and the handheld printer 2. When the device disconnection button 906 is pressed, the printer control unit 803b disconnects the communication between the information processing apparatus 1 and the handheld printer 2.

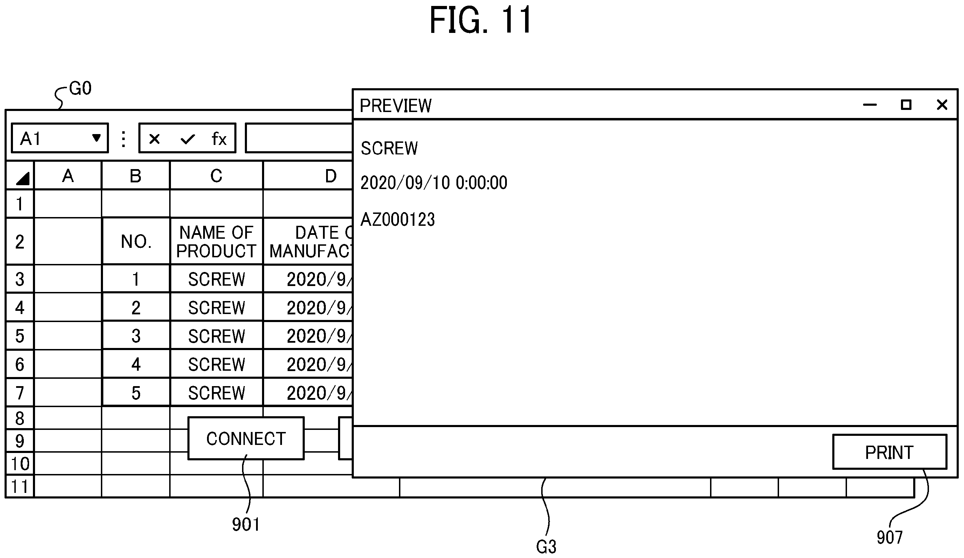

Referring now to FIG. 11, a description is given of a print screen displayed on the information processing apparatus 1 according to the present embodiment.

FIG. 11 is a diagram illustrating an example of the print screen displayed on the information processing apparatus 1 according to the present embodiment.

In the present embodiment, when the print button 902 is pressed, the element extracting unit 802a extracts data to be printed from elements included in data processed in table format by the application 801. For example, when cells C3 to E3 are designated as a print range, the element extracting unit 802a extracts the elements in the designated print range as the data to be printed, from the elements included in the data processed in table format by the application 801. A user of the information processing apparatus 1 may designate the print range by the source code of the macro 802 or by activating the print range in the tabular data.

In the present embodiment, the element extracting unit 802a extracts, as the data to be printed, elements of one row (or an element of one cell) from the elements included in the data managed in table format by the application 801. Alternatively, the element extracting unit 802a may extract elements in a combination of a plurality of rows and a plurality of columns from the elements included in the data managed in table format by the application 801. In this case, the element extracting unit 802a extracts the elements of a plurality of cells for each cell in a preset order from the elements included in the data processed in table format by the application 801. In the present embodiment, the element extracting unit 802a also extracts the print settings when the data to be printed is printed. The print settings include, e.g., a writing start position (e.g., a main body center or an exterior), the number of repetitions, an operation way (e.g., right, left, or zigzag). The print settings may be embedded in the macro 802 in advance, for example.

As illustrated in FIG. 11, the print data generating unit 803a generates print data based on the data to be printed. The print data generating unit 803a then displays, on the display 506, a preview screen G3 including the generated print data (or a print image) and a print instruction button 907 that is used to instruct the information processing apparatus 1 to cause the handheld printer 2 to print the print image. In the present embodiment, when, e.g., a user of the information processing apparatus 1 confirms the print image on the preview screen G3 displayed on the display 506 and presses the print instruction button 907 in the preview screen G3, the element extracting unit 802a transfers the print settings to the print data generating unit 803a. The print data generating unit 803a transmits the print data and the print settings to the handheld printer 2, which starts printing.

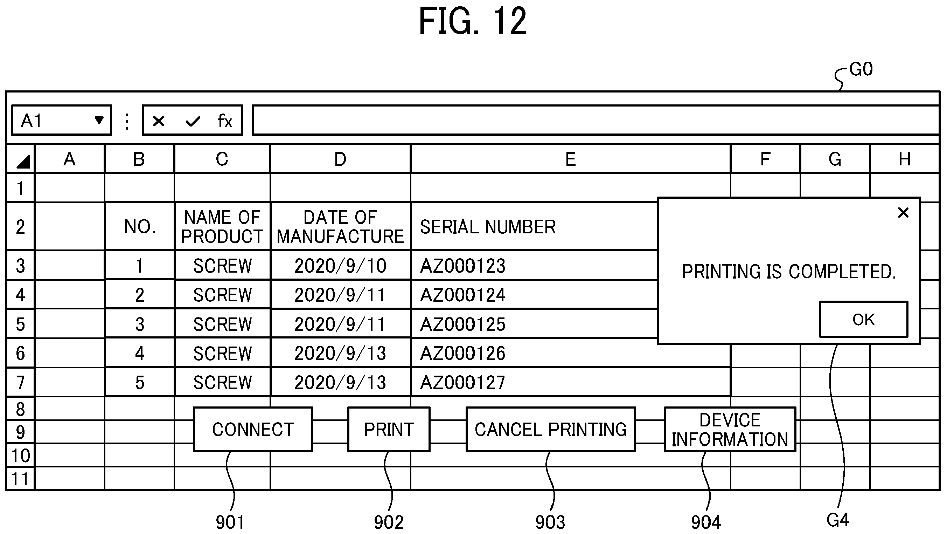

Referring now to FIG. 12, a description is given of a pop-up displayed on the information processing apparatus 1 when printing is completed, according to the present embodiment.

FIG. 12 is a diagram illustrating an example of the pop-up displayed on the information processing apparatus 1 when printing is completed, according to the present embodiment.

In the present embodiment, when, e.g., a user operates the handheld printer 2 and completes the printing with the handheld printer 2, the printer control unit 803b detects that the printing with the handheld printer 2 is completed and causes the screen display unit 803d to display, on the display 506, a pop-up G4 to provide information indicating that the printing with the handheld printer 2 is completed.

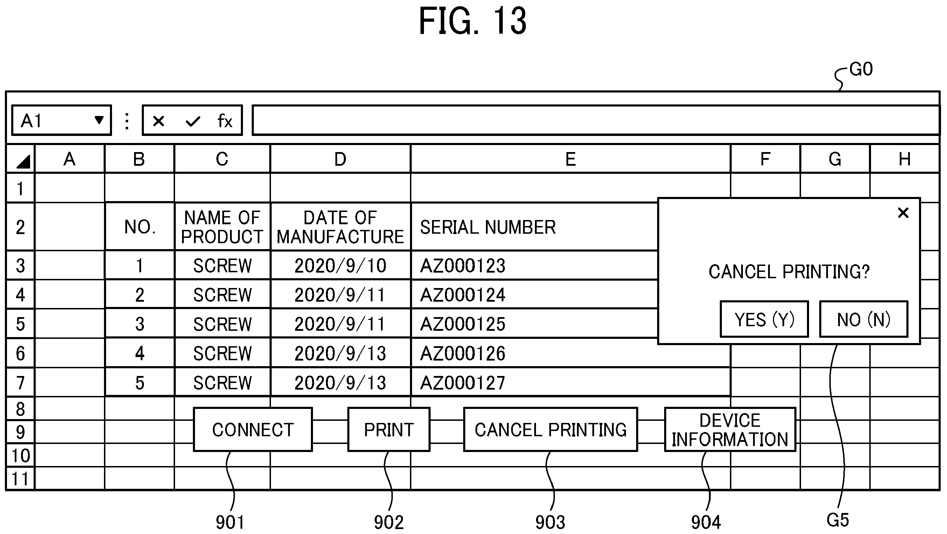

Referring now to FIG. 13, a description is given of a print cancelling process performed by the information processing apparatus 1 according to the present embodiment.

FIG. 13 is a diagram illustrating a print cancelling screen displayed on the information processing apparatus 1 according to the present embodiment.

In the present embodiment, when the print cancellation button 903 is pressed and the print cancelling unit 802c transmits the cancelling instruction to the printer control unit 803b, the printer control unit 803b transmits, via the transceiver unit 803c, the print cancelling instruction to the handheld printer 2 to instruct the handheld printer 2 to delete the print data. As illustrated in FIG. 13, the screen display unit 803d displays, on the display 506, a screen G5 for, e.g., a user to confirm cancellation of the printing performed by the handheld printer 2. When the print cancellation is selected, the printer control unit 803b transmits, via the transceiver unit 803c, the print cancelling instruction to the handheld printer 2 to instruct the handheld printer 2 to delete the print data temporarily stored in the handheld printer 2.

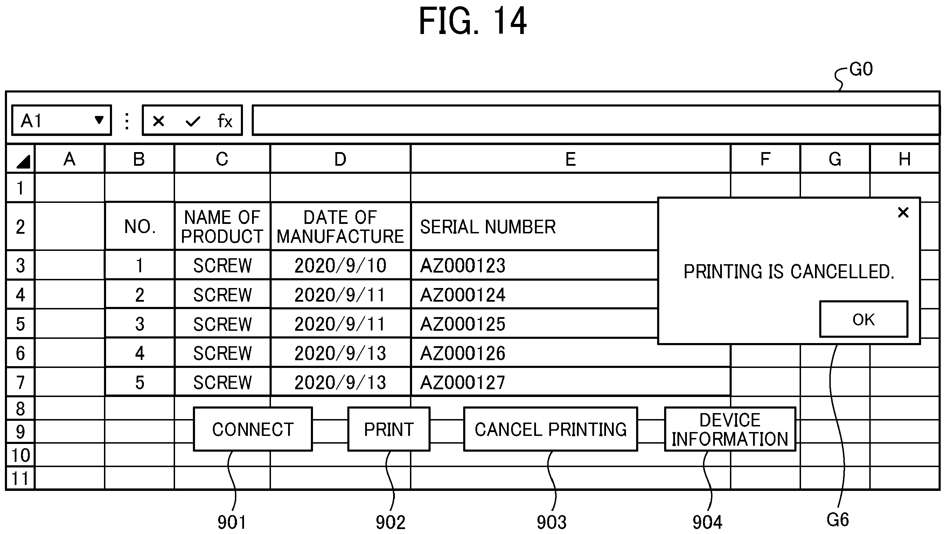

Referring now to FIG. 14, a description is given of a pop-up displayed on the information processing apparatus 1 when the print data is deleted, according to the present embodiment.

FIG. 14 is a diagram illustrating an example of the pop-up displayed on the information processing apparatus 1 when the print data is deleted, according to the present embodiment.

In the present embodiment, when the printer control unit 803b detects that the print data temporarily stored in the handheld printer 2 has been completed, in other words, in response to notification from the handheld printer 2 of completion of deletion of the print data, the screen display unit 803d displays, on the display 506, a pop-up G6 to provide information indicating that the handheld printer 2 has deleted the print data, as illustrated in FIG. 14.

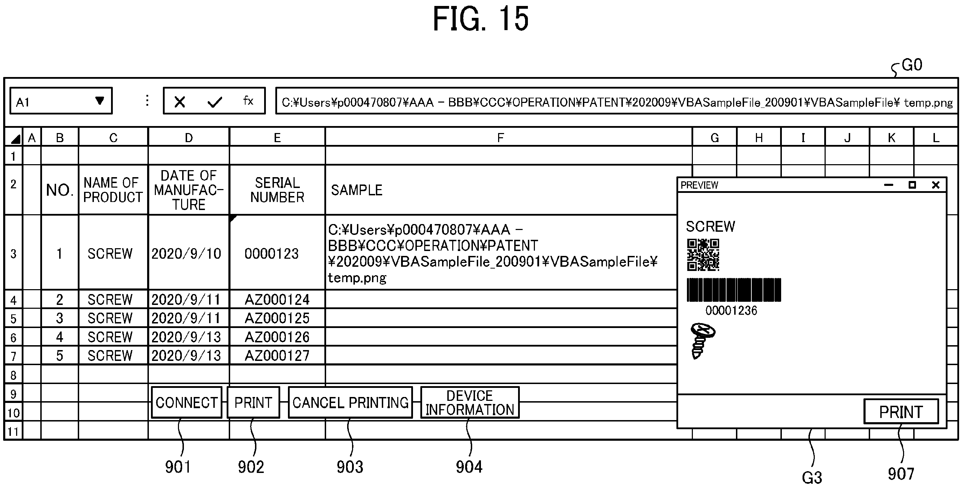

Referring now to FIGS. 15 to 17A, a description is given of a process for the information processing apparatus 1 to extract elements from tabular data according to the present embodiment.

FIG. 15 to 17A are diagrams illustrating an example of the process for the information processing apparatus 1 to extract elements from tabular data according to the present embodiment.

In the present embodiment, the element extracting unit 802a extracts the setting information on the print type (e.g., a format such as text, QR Code^{®}, a barcode, or an image) associated with a cell of the data to be printed from the cells in the data managed in table format by the application 801. For example, the element extracting unit 802a extracts the setting information on the print type associated with the elements in the print range of from cells C3 to E3, from the elements included in the data processed in table format by the application 801.

In a case in which the element extracting unit 802a extracts text as the setting information associated with the cells of the data to be printed, the element extracting unit 802a transfers the setting information such as font size, font type, rich text (e.g., underscore, bold, italic, and/or strikethrough) and horizontal or vertical writing to the print data generating unit 803a together with the data to be printed. Then, the print data generating unit 803a analyzes the data to be printed and the setting information transferred from the element extracting unit 802a. Based on the analysis result, the print data generating unit 803a converts the data to be printed into text print data.

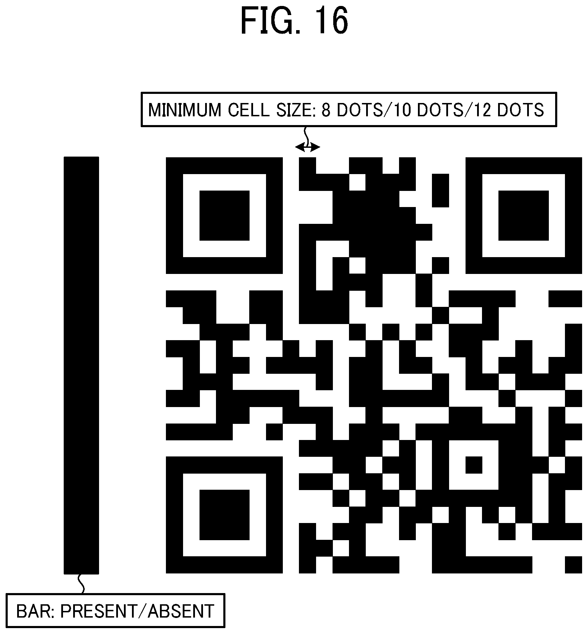

In a case in which the element extracting unit 802a extracts QR Code^{®} as the setting information associated with the cells of the data to be printed, the element extracting unit 802a transfers the setting information as illustrated in FIG. 16, such as the minimum cell size of the QR Code^{®}, the error correction level of the QR Code^{®}, and whether a bar is present in the QR Code^{®}, to the print data generating unit 803a together with the data to be printed. Then, the print data generating unit 803a analyzes the data to be printed and the setting information transferred from the element extracting unit 802a. Based on the analysis result, the print data generating unit 803a converts the data to be printed into QR Code^{®} print data.

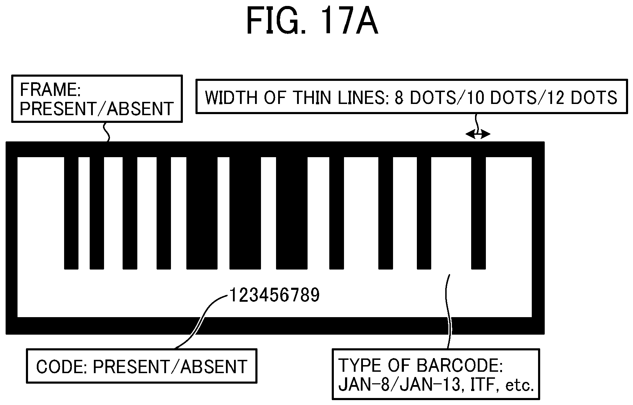

In a case in which the element extracting unit 802a extracts a barcode as the setting information associated with the cells of the data to be printed, the element extracting unit 802a transfers the setting information as illustrated in FIG. 17A, such as the type of the barcode, the width of thin lines, whether a frame is present in the barcode, whether code is present in the barcode, and the height of the barcode, to the print data generating unit 803a together with the data to be printed. Then, the print data generating unit 803a analyzes the data to be printed and the setting information transferred from the element extracting unit 802a. Based on the analysis result, the print data generating unit 803a converts the data to be printed into barcode print data.

In a case in which the element extracting unit 802a extracts an image as the setting information associated with the cells of the data to be printed, the element extracting unit 802a transfers the setting information such as the path information indicating a path of image data of the data to be printed (e.g., a path associated with the print range of from C3 to E3 in the data managed in table format by the application 801), to the print data generating unit 803a together with the data to be printed. Then, the print data generating unit 803a analyzes the data to be printed and the setting information transferred from the element extracting unit 802a and acquires the image data according to the path indicated by the path information. The print data generating unit 803a then generates the acquired image data as print data resulting from conversion of the data to be printed.

As illustrated in FIG. 15, the screen display unit 803d displays, on the display 506, the preview screen G3 including the print image of the print data and the print instruction button 907.

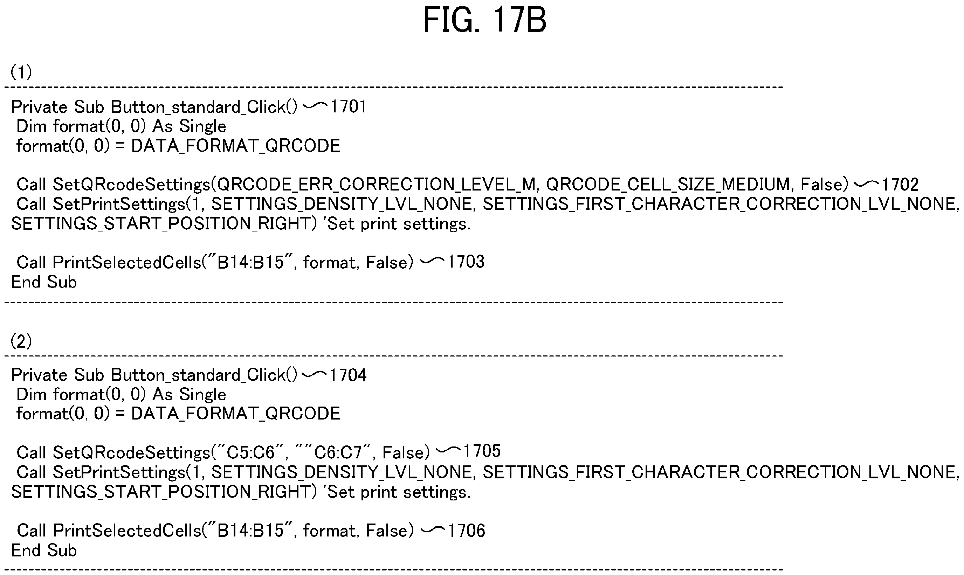

FIG. 17B is a diagram illustrating examples of the macro 802 including the setting information executed by the information processing apparatus 1 according to the present embodiment.

In the present embodiment, the setting information may be embedded in the macro 802. For example, as indicated by code 1701 in FIG. 17B (1), the macro 802 is associated with a button installed on the application. Codes 1702 and 1703 of the setting information embedded in the macro 802 are executed when the button is clicked. The code 1702 sets, to the printer application 803, the error correction level = M, the cell size = medium, and the bar = none. The code 1703 extracts and transfers cell data to the printer application 803 and instructs the printer application 803 to convert the cell data into QR Code^{®} and print the QR Code^{®}. In the present embodiment, the setting information may be embedded together with a command to refer cells (i.e., other cells) other than the cells including the elements serving as the data to be printed in the data managed in table format by the application 801. For example, as indicated by code 1704 in FIG. 17B (2), the macro 802 is associated with a button installed on the application. Codes 1705 and 1706 of the setting information embedded in the macro 802 are executed when the button is clicked. Here, the code 1705 sets, to the printer application 803, the error correction level = M, the cell size = medium, and the bar = none input to the other cells. The code 1706 extracts and transfers cell data input to the other cells to the printer application 803 and instructs the printer application 803 to convert the cell data into QR Code^{®} and print the QR Code^{®}.

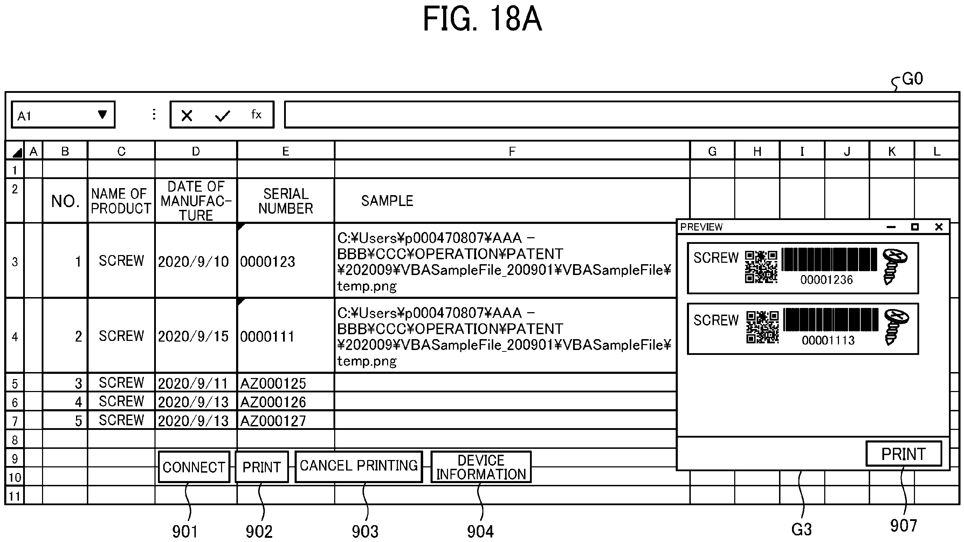

Referring now to FIG. 18A, a description is given of designation of a print range by the information processing apparatus 1 according to the present embodiment.

FIG. 18A is a diagram illustrating an example of the designation of a print range by the information processing apparatus 1 according to the present embodiment.

In the present embodiment, when cells C3 to F4 are designated as a print range out of the cells in the data processed in table format by the application 801, the element extracting unit 802a extracts data in the cells C3 to F4 (i.e., data in a plurality of cells) as data to be printed. In addition, the element extracting unit 802a extracts a format (i.e., print type) associated with the element for each cell in the print range of from C3 to F4. The print data generating unit 803a generates print data for each cell in the print range of from C3 to F4, based on the data to be printed and the format. Then, as illustrated in FIG. 18A, the screen display unit 803d displays, on the display 506, the preview screen G3 including a print image of combined data obtained by combining the print data generated for each cell in the print range of from C3 to F4. When the print instruction button 907 included in the preview screen G3 is pressed, the print data generating unit 803a transmits the combined data as print data to the handheld printer 2 via the transceiver unit 803c.

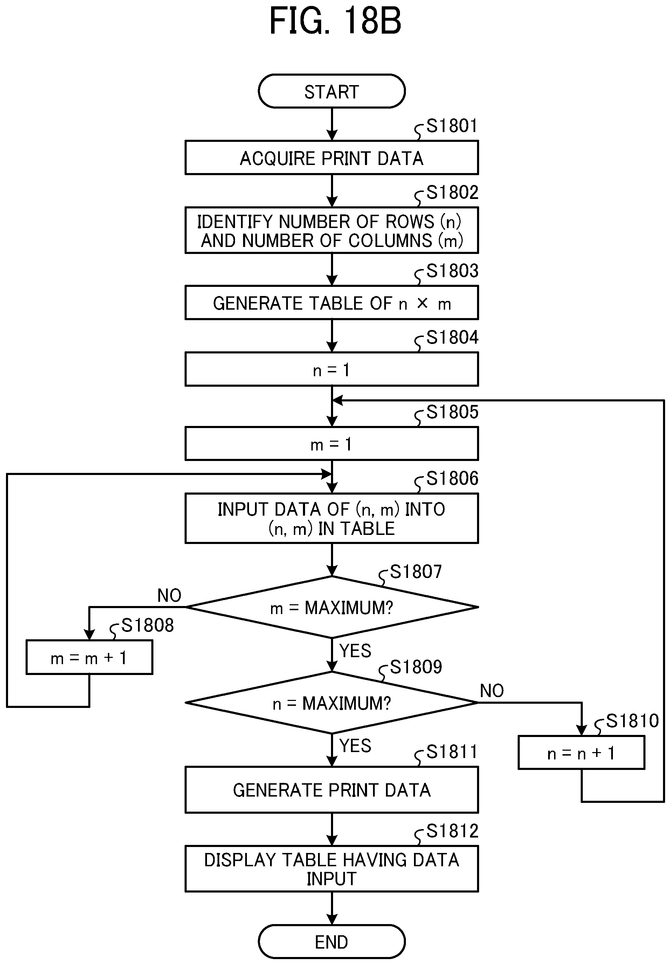

FIG. 18B is a flowchart illustrating a print data generating process performed by the information processing apparatus 1 according to the present embodiment.

In step S1801, the print data generating unit 803a acquires, as data to be printed, data extracted by the element extracting unit 802a.

In step S1802, the print data generating unit 803a identifies the number of rows "n" and the number of columns "m" of the data to be printed acquired from the cells of data processed in table format by the application 801.

In step S1803, the print data generating unit 803a generates a table of the identified number of rows "n" and the identified number of columns "m."

In step S1804, the print data generating unit 803a sets the number of rows "n" to "1."

In step S1805, the print data generating unit 803a sets the number of columns "m" to "1."

In step S1806, the print data generating unit 803a inputs, into the generated table, the data to be printed of the number of rows "n" = 1 and the number of columns "m" = 1.

In step S1807, the print data generating unit 803a determines whether the set number of columns "m" is the maximum, in other words, whether the set number of columns "m" is the number of columns "m" identified in step S1802. When the set number of columns "m" is not the maximum (No in step S1807), in step S1808, the print data generating unit 803a increments the number of columns "m" and returns to step S1806. On the other hand, when the set number of columns "m" is the maximum (Yes in step S1807), in step S1809, the print data generating unit 803a determines whether the set number of rows "n" is the maximum, in other words, whether the set number of rows "n" is the number of rows "n" identified in step S1802.

When the set number of rows "n" is not the maximum (No in step S1809), in step S1810, the print data generating unit 803a increments the number of rows "n" and returns to step S1805. On the other hand, when the set number of rows "n" is the maximum (Yes in step S1809), in step S1811, the print data generating unit 803a generates, as print data, the table having the data to be printed input.

In step S1812, the screen display unit 803d displays the table on the display 506.

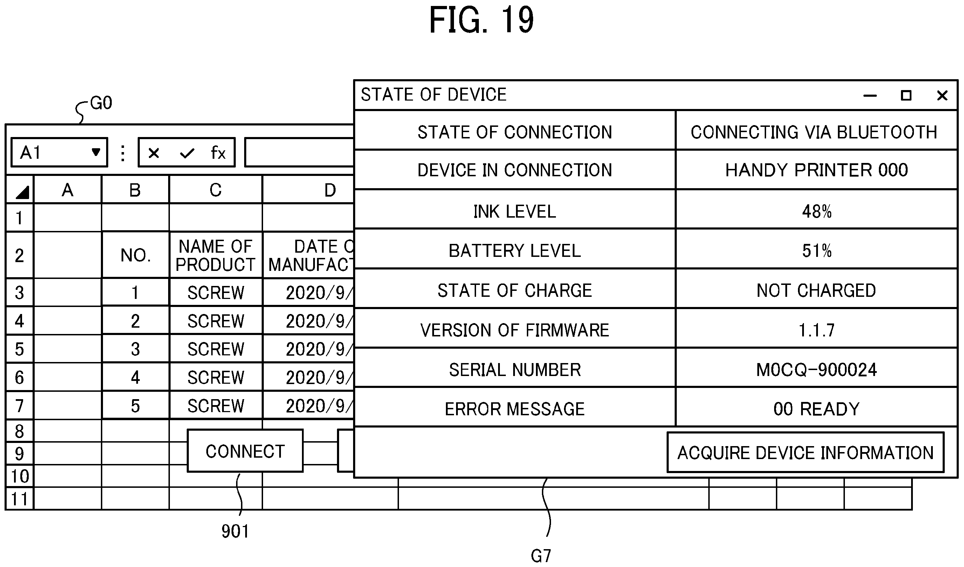

Referring now to FIG. 19, a description is given of a process for the information processing apparatus 1 to display a device information screen according to the present embodiment.

FIG. 19 is a diagram illustrating an example of the device information screen displayed on the information processing apparatus 1 according to the present embodiment.

In the present embodiment, when the device information button 904 is pressed, the printer information acquiring unit 802d transfers the device information acquiring instruction to the printer control unit 803b. The printer control unit 803b communicates with the handheld printer 2 and acquires device information (e.g., the device name and the ink level of the handheld printer 2) from the handheld printer 2. Then, as illustrated in FIG. 19, the printer control unit 803b displays a device information screen G7 including the acquired device information on the display 506 via the screen display unit 803d.

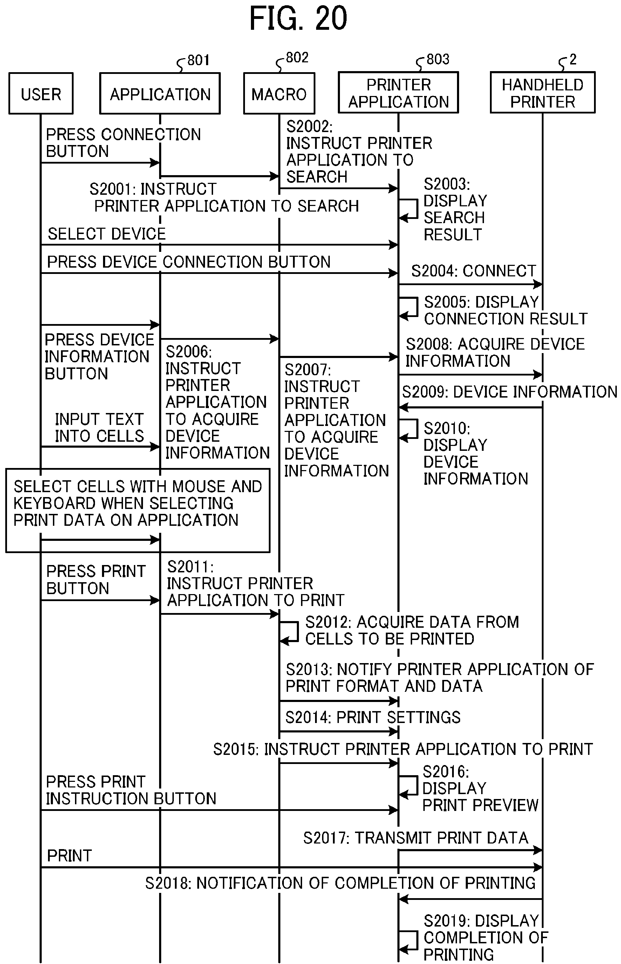

Referring now to FIG. 20, a description is given of a flow of a handheld printer control process (i.e., a process of controlling the handheld printer 2) performed by the information processing apparatus 1 according to the present embodiment.

FIG. 20 is a sequence diagram illustrating an example of the handheld printer control process performed by the information processing apparatus 1 according to the present embodiment.

When a user presses the connection button 901, in steps S2001 and S2002, the application 801 and the macro 802 receive and transfer the connection instruction to the printer application 803 to instruct the printer application 803 to search for the handheld printer 2.

In step S2003, the printer application 803 searches for the handheld printer 2 and displays the device search screen G1 including the search result on the display 506.

When the user selects the handheld printer 2 (i.e., device) and presses the device connection button 905, in step S2004, the printer application 803 executes device connection that enables communication between the information processing apparatus 1 and the selected handheld printer 2.

In step S2005, the printer application 803 displays, on the display 506, the connection result screen G2 providing information indicating that the connection between the information processing apparatus 1 and the handheld printer 2 has succeeded.

Thereafter, when the user of the information processing apparatus 1 presses the device information button 904, in steps S2006 and 2007, the application 801 and the macro 802 receive and transfer the device information acquiring instruction to the printer application 803 to instruct the printer application 803 to acquire the device information.

In steps S2008 and S2009, the printer application 803 communicates with the handheld printer 2 and acquires the device information from the handheld printer 2.

Then, in step S2010, the printer application 803 displays, on the display 506, the device information screen G7 including the acquired device information.

The user of the information processing apparatus 1 uses, e.g., the keyboard 511 to input text to cells of a table processed by the application 801. In addition, the user of the information processing apparatus 1 uses, e.g., the keyboard 511 and the pointing device 512 to select cells in a print range from the cells of the data processed in table format by the application 801.

Thereafter, when the user of the information processing apparatus 1 presses the print button 902, in step S2011, the application 801 receives the print instruction and instructs the macro 802 to print.

In step S2012, the macro 802 extracts, as data to be printed, data (i.e., elements) of the print range (i.e., cells) selected from the cells of the data processed in table format by the application 801.

In step S2013, the macro 802 notifies the printer application 803 of the extracted data to be printed and the format associated with the data to be printed.

In step S2014, the macro 802 notifies the printer application 803 of the print settings embedded in advance in the macro 802.

In step S2015, the macro 802 instructs the printer application 803 to print the data to be printed.

In step S2016, the printer application 803 displays, on the display 506, the preview screen G3 including print data (i.e., print image) resulting from conversion of the data to be printed notified from the macro 802.

Thereafter, when the user of the information processing apparatus 1 presses the print instruction button 907 in the preview screen G3, in step S2017, the printer application 803 transmits, to the handheld printer 2, the print settings and the print data resulting from conversion of the data to be printed.

Thereafter, the user operates the handheld printer 2 to print.

In step S2018, the printer application 803 detects that the handheld printer 2 has completed the printing.

In step S2019, the printer application 803 displays, on the display 506, the pop-up G4 providing information indicating that the handheld printer 2 has completed the printing.

As described above, when the handheld printer 2 prints the data managed in table format by the application 801, the printing system 100 of the present embodiment obviates the need to convert the elements included in the data processed in table format by the application 801 into CSV or the need for, e.g., a user to manually copy the elements and input the elements to a dedicated application. In other words, the printing system 100 of the present embodiment facilitates printing of individual elements included in the data processed in table format by the application 801.

Now, a description is given of Example 1 as a specific example of the embodiments of the present disclosure.

In the present example, a printer software development kit (SDK) is provided separately from a printer application in an information processing apparatus. In other words, some functions of the printer application included in the information processing apparatus are separated as the functions of the printer SDK. A redundant description of like configurations of the present example and the embodiment described above is herein omitted.

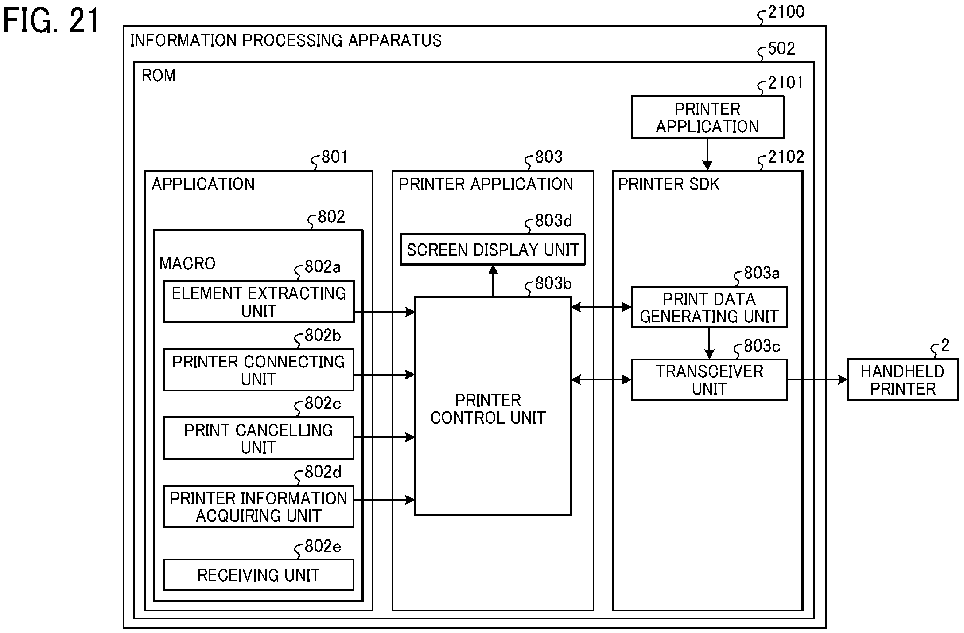

FIG. 21 is a block diagram illustrating a functional configuration of an information processing apparatus 2100 according to the present example.

In the information processing apparatus 2100 according to the present example, the ROM 502 stores, e.g., the application 801, the macro 802, the printer application 803, a printer application 2101, and a printer SDK 2102.

In the present example, as described above, the printer application 803 transfers various kinds of information, such as data to be printed, print settings, and processing instructions, between the application 801 (including the macro 802) and the printer SDK 2102. In addition, the printer application 803 displays, on the display 506, various kinds of information such as the device search screen G1, the connection result screen G2, the preview screen G3, the pop-ups G4 and G6, the screen G5, and the message 1001. In other words, as illustrated in FIG. 21, the printer application 803 includes the printer control unit 803b and the screen display unit 803d.

The printer application 2101 is an application that transfers various kinds of information between another application different from the application 801 and the printer SDK 2102.

The printer SDK 2102 is an application that may be reused by the printer application 803 or the printer application 2101. Specifically, the printer SDK 2102 executes device control of the handheld printer 2 such as conversion from data to be printed, which is notified by the macro 802 and the printer application 2101, into print data and transmission of the print data to the handheld printer 2. In other words, as illustrated in FIG. 21, the printer SDK 2102 includes the print data generating unit 803a and the transceiver unit 803c.

As described above, according to the information processing apparatus 2100 of the present example, the common printer SDK 2102 is used when the printer application 803 controls the handheld printer 2 and when the printer application 2101 controls the handheld printer 2. Accordingly, the information processing apparatus 2100 enhances the resource efficiency.

Programs executed by the information processing apparatus 1 or the information processing apparatus 2100 in the embodiments of the present disclosure are stored in e.g., the ROM 502 in advance, thus being providable. The programs executed by the information processing apparatus 1 or the information processing apparatus 2100 in the embodiments of the present disclosure may be stored in a computer-readable carrier means, such as a compact disc read-only memory (CD-ROM), a flexible disk (FD), a compact disc recordable (CD-R), and a digital versatile disk (DVD), in an installable or executable file format, to be provided.

Alternatively, the programs executed by the information processing apparatus 1 or the information processing apparatus 2100 in the embodiments of the present disclosure may be stored in a computer connected to a network such as the Internet and downloaded via the network, thus being providable. The programs executed by the information processing apparatus 1 or the information processing apparatus 2100 in the embodiments of the present disclosure may be provided or distributed via a network such as the Internet.

According to the embodiments, printing of individual elements included in tabular data is facilitated.

The above-described embodiments are illustrative and do not limit the present invention. Thus, numerous additional modifications and variations are possible in light of the above teachings. For example, elements and/or features of different illustrative embodiments may be combined with each other and/or substituted for each other within the scope of the present invention.

Any one of the above-described operations may be performed in various other ways, for example, in an order different from the one described above.

The present invention can be implemented in any convenient form, for example using dedicated hardware, or a mixture of dedicated hardware and software. The present invention may be implemented as computer software implemented by one or more networked processing apparatuses. The processing apparatuses include any suitably programmed apparatuses such as a general purpose computer, a personal digital assistant, a Wireless Application Protocol (WAP) or third-generation (3G)-compliant mobile telephone, and so on. Since the present invention can be implemented as software, each and every aspect of the present invention thus encompasses computer software implementable on a programmable device. The computer software can be provided to the programmable device using any conventional carrier medium (carrier means). The carrier medium includes a transient carrier medium such as an electrical, optical, microwave, acoustic or radio frequency signal carrying the computer code. An example of such a transient medium is a Transmission Control Protocol/Internet Protocol (TCP/IP) signal carrying computer code over an IP network, such as the Internet. The carrier medium may also include a storage medium for storing processor readable code such as a floppy disk, a hard disk, a compact disc read-only memory (CD-ROM), a magnetic tape device, or a solid state memory device.

## Claims

1. An information processing apparatus (1) comprising:
a receiving unit (802e), as a component displayed on a screen by an application configured to process tabular data, configured to receive a print instruction for an element included in the tabular data to be printed;
a print data generating unit (803a) configured to generate print data corresponding to the element in response to the receiving unit (802e) receiving the print instruction; and
a transceiver unit (803c) configured to transmit the print data generated by the print data generating unit (803a) to a printing apparatus.

2. The information processing apparatus (1) according to claim 1, further comprising an element extracting unit (802a) configured to extract the element from the tabular data as an element to be printed,
wherein the print data generating unit (803a) is configured to generate the print data corresponding to the element extracted by the element extracting unit (802a).

3. The information processing apparatus (1) according to claim 1 or 2, further comprising:
a display (506); and
a screen display unit (803d) configured to display the print data on the display (506).

4. The information processing apparatus (1) according to any one of claims 1 to 3, further comprising:
a print cancelling unit (802c) configured to receive a print cancelling instruction for printing to be cancelled; and
a printer control unit (803b) configured to instruct the printing apparatus to cancel the printing in response to the print cancelling unit (802c) receiving the print cancelling instruction.

5. The information processing apparatus (1) according to claim 4, further comprising a printer connecting unit (802b) configured to receive a connection instruction for the information processing apparatus (1) to be connected to the printing apparatus,
wherein the printer control unit (803b) is configured to connect the information processing apparatus (1) to the printing apparatus in response to the printer connecting unit (802b) receiving the connection instruction.

6. The information processing apparatus (1) according to claim 4 or 5, further comprising a printer information acquiring unit (802d) configured to receive a device information acquiring instruction for device information on the printing apparatus to be acquired,
wherein the printer control unit (803b) is configured to acquire the device information from the printing apparatus in response to the printer information acquiring unit (802d) receiving the device information acquiring instruction.

7. The information processing apparatus (1) according to claim 2,
wherein the print data generating unit (803a) is configured to generate the print data according to setting information associated with the element extracted by the element extracting unit (802a).

8. An information processing method comprising:
receiving (S2011) a print instruction for an element included in tabular data to be printed;
generating (S1811) print data corresponding to the element in response to the receiving the print instruction; and
transmitting (S2017) the print data generated to a printing apparatus.

9. The information processing method according to claim 8, further comprising extracting (S2012) the element from the tabular data as an element to be printed,
wherein the generating (S1811) includes generating the print data corresponding to the element extracted.

10. The information processing method according to claim 8 or 9, further comprising:
receiving a print cancelling instruction for printing to be cancelled; and
controlling the printing apparatus,
wherein the controlling includes instructing the printing apparatus to cancel the printing in response to the receiving the print cancelling instruction.

11. The information processing method according to claim 10, further comprising receiving (S2001) a connection instruction for an information processing apparatus to be connected to the printing apparatus,
wherein the controlling includes connecting (S2004) the information processing apparatus to the printing apparatus in response to the receiving the connection instruction.

12. The information processing method according to claim 10 or 11, further comprising receiving (S2006) a device information acquiring instruction for device information on the printing apparatus to be acquired,
wherein the controlling includes acquiring (S2009) the device information from the printing apparatus in response to the receiving the device information acquiring instruction.

13. The information processing method according to claim 9,
wherein the generating (S1811) includes generating the print data according to setting information associated with the element extracted.

14. An information processing system (100) comprising:
a printing apparatus (2); and
the information processing apparatus (1) according to claim 1, configured to communicate with the printing apparatus and execute an application to process tabular data.

15. A carrier means carrying computer-readable program code that causes a computer to perform the information processing method according to claim 8.
